# EUROPEAN PATENT SPECIFICATION

(11) **EP 3 982 286 B1**
(45) Date of publication and mention of the grant of the patent: **25.12.2024**
(21) Application number: 20200514.6
(22) Date of filing: 07.10.2020
(51) Int. Cl.: G06K 7/14

(54) **COMPUTER-IMPLEMENTED METHOD AND DEVICE FOR RECONSTRUCTING A BARCODE**
COMPUTERIMPLEMENTIERTES VERFAHREN UND VORRICHTUNG ZUR REKONSTRUKTION EINES STRICHCODES
PROCÉDÉ ET DISPOSITIF MIS EN UVRE PAR ORDINATEUR POUR RECONSTRUIRE UN CODE À BARRES

(43) Date of publication of application: 13.04.2022
(73) Proprietor: Siemens Sanayi ve Ticaret A. S., 34870 Istanbul (TR)
(72) Inventor: Sag, Engin, 34880 Kartal (TR); Yildiz, Huseyin Alpaslan, 34852 Istanbul (TR)
(74) Representative: Siemens Patent Attorneys

(56) References cited:
- EP-A1- 2 680 186
- EP-B1- 2 680 186
- US-A1- 2012 173 347
- US-B1- 7 328 847
- CHEN ET AL: "Multiple-watermarking scheme of the European Article Number Barcode using similar code division multiple access technique", APPLIED MATHEMATICS AND COMPUTATION, ELSEVIER, US, vol. 197, no. 1, 11 February 2008 (2008-02-11), pages 243 - 261, XP022475535, ISSN: 0096-3003, DOI: 10.1016/J.AMC.2007.07.078

## Description

The invention relates to a computer-implemented method and a device for reconstructing a barcode.

Generally, industrial optical readers work often in environments with harsh conditions, where for instance reflections on metal surfaces or grains because of wrong laminations can occur.

Optical reading devices for such as barcode readers, scanners or cameras can read a provided barcode by an electronic device.

A barcode is an opto-electronically readable font that consists of parallel lines and spaces of different widths defining a code, which maps data in binary symbols.

However, the decoding performance of industrial optical readers can be reduced dramatically by undesired optical effects, like reflections and bright light spots or bad illuminated areas.

In the publication CHEN ET AL: "Multiple-watermarking scheme of the European Article Number Barcode using similar code division multiple access technique", APPLIED MATHEMATICS AND COMPUTATION, ELSEVIER, US, vol. 197, no. 1, 11 February 2008 (2008-02-11), pages 243-261, XP022475535, ISSN: 0096-3003, DOI: 10.1016/J.AMC.2007.07.078 uses a barcode pattern to generate the watermarks to enhance the effect of the digital rights management, with following two advantages: (1) the secret image has very high security by using SCDMA and APSK as in digital communication; and (2) the extracted watermarks have the same quality even under all kinds of attacks, which is better than other schemes with different extracted watermark quality.

This is achieved by a mix codec, a hamming codec, and a spread spectrum technique construct a similar code division multiple access (SCDMA) structure. It is used to configure a multiple-watermarking scheme for still images.

The publication EP 2 680 186 A1 (OPTOELECTRONICS CO LTD [JP]), 1 January 2014 (2014-01-01), describes a method to prevent misreading of barcodes and to allow accurate outputting of bar data even when an element is damaged or blurred. An optical information reading device contains a computation means 23 a for adding widths of 6 elements containing a bar and a space that are adjacent within one character to derive respective patterns of 2- through n element added widths and for converting each of the patterns of 2- through n-element added widths into the module number for one character to obtain the module numbers of the patterns of the 2- through n-element added widths; an extraction means 23b for narrowing down the target characters to extract a candidate character, wherein the target character is that each module number of the 2- through n-element widths is an integer with an error equal to or less than 1; and a search means 23d for comparing the extracted candidate character, having the module numbers of the patterns of the 2- through n-element added widths with the expected value character for evaluating the candidate character to search for an expected value character with the strongest correlation to the candidate character.

The publication US 7 328 847 B1 (SHEN BO [US] ET AL) 12 February 2008 (2008-02-12) provides barcode data communication methods, barcode embedding methods, and barcode systems are described. According to one embodiment, a barcode data communication method includes accessing a composite image comprising a disguised barcode image incapable of being directly read from a base image by a barcode reader, extracting data corresponding to the barcode image from the composite image, modifying the data to provide the barcode image in a state wherein the barcode image may be directly read by a barcode reader, and reading the barcode image using the barcode reader after the modifying.

It is the objective of the invention to improve the reader performance for barcodes at difficult optical conditions.

The objective of the invention is solved by a method for reconstructing a barcode, wherein for a received digital input image with a barcode, a bar of the barcode with a gap, the gap represented and defined by an interrupted or broken portion of the bar, is identified, and the gap is reconstructed pixelwise by setting all gap pixels of the bar to a value representing the identified bar as a numeric value of an index in a grey scale, and a reconstructed digital output image is provided, wherein following steps are executed:
a) receiving a digital input image with a barcode,
b) detecting a rectangular candidate area within the received image, wherein the area includes the barcode and the bars of the barcode are perpendicularly arranged elongated along the longer side of the rectangular candidate area,
c) calculating a virtual sampling line for the candidate area, which line is parallel to a longer side of the rectangular candidate area, preferably in the middle between both longer sides of the candidate area,
d) defining a sampling point on the virtual sampling line,
e) calculating a virtual bar line for the candidate area perpendicular to the virtual sampling line crossing the sampling point,
f) identifying bar pixels within the candidate area being on the virtual bar line,
g) calculating an average field index for each of the bar pixels representing the average pixel value, representing a numeric value of an index in a grey scale, of the pixels of the candidate area within a predefined distance around the respective pixel,
h) detecting significant pixels from all the bar pixels, which respective pixel value is smaller than the respective average field index,
i) counting significant pixels and if the count is greater than a predefined confidence ratio, define all pixels along the virtual bar line (BL) as proper pixels,
j) reconstructing pixels by setting the proper pixels to the value of a respective pixel of a bar pixel in the image,
k) selecting a new position of the sampling point (SP) on the virtual sampling line (SL), which is not yet processed,
l) continuing with step e), until all positions of the sampling point are being processed,
m) provide the reconstructed digital image as a digital output image.

By the invention, a barcode reconstruction for barcodes is obtained in a very simple manner.

The reconstructed barcode can be read easily and reliable by conventional reader.

Especially highly distorted regions, for instance by optical reflections, within the barcode area can be reconstructed.

The basic principle is, that a bar of a barcode can appear as interrupted, which can be closed when identifying a probability of a bar line.

Therefore, reconstruction can be interpreted as closing a gap in a distorted, broken bar line.

Since a bar code can also appear inverse, a value representing a bar pixel in the image can be white or black, or even appearing like grey when disturbed.

Bars of a bar code should provide high contrast related to the background.

Such probability can be determined when a certain number of dark pixels along a potential bar line is present.

Optionally to that, a further spacer, i.e. a certain number of white pixels between parallel bar lines can support the probability of bar lines.

Grey scaled pixels can also support the probability of a bar line or a spacer.

The method provides a very simple and reliable implementation for reconstructing a barcode, with a gap at a bar of a barcode.

With other words, step i) can also being defined as determining the virtual bar line is a proper bar line that belongs to the barcode, if the significant pixel count or the length of a bar of the virtual bar line is greater than a predefined confidence ratio.

Regarding step j), the set value of a proper pixel can be one leading to a high contrast, i.e. at least a predefined contrast level, with respect to the background of the image or candidate area.

The shown method with steps a) to m) can replace the initial description of the method of the invention since the result is identical.

In a further development of the invention it is foreseen that
- in step d) setting the sampling point to the crossing point of the virtual sampling line and a first virtual line being in the course of a shorter edge of the rectangular candidate area, and
- in step k) shifting the sampling point to the neighboring pixel of the previous sampling point on the virtual sampling line, and
- in step l) continuing with step e), until the sampling point reaches a second virtual line being in the course of the other shorter edge of the rectangular candidate area.

By this feature, a simplified implementation can be obtained.

In a further development of the invention it is foreseen that the sampling point is set to the crossing point of the virtual sampling line and a first virtual line being in the course of a shorter edge of the rectangular candidate area.

By this feature, a simplified implementation can be obtained.

In a further development of the invention it is foreseen that after the step of detecting a candidate area, a step with cropping the image to the candidate area is performed.

By this feature, a simplified and fast implementation can be obtained reducing processing power and saving memory.

The objective of the invention is also solved by a device for reconstructing a barcode, comprising a processor and a memory, wherein the device is configured to receive a digital input image with the barcode and to reconstruct the barcode according to the method of the invention, and to provide the reconstructed digital output image.

The invention is explained in more detail below with reference to an exemplary embodiment shown in the accompanying drawings. In the drawings shows
- Fig. 1: a flowchart as an embodiment of the method of the invention and a device according to the invention,
- Fig. 2: an example for a digital image with a barcode,
- Fig. 3: a cropped part of the image of the previous figure,
- Fig. 4: an embodiment of steps of the method according to the invention,
- Fig. 5: an illustration of an example with a virtual bar line with virtual bar pixels,
- Fig. 6: an illustration of an example for determining significant pixels,
- Fig. 7: an example of an image with reconstructed pixels,
- Fig. 8: an example of an outputted reconstructed image.

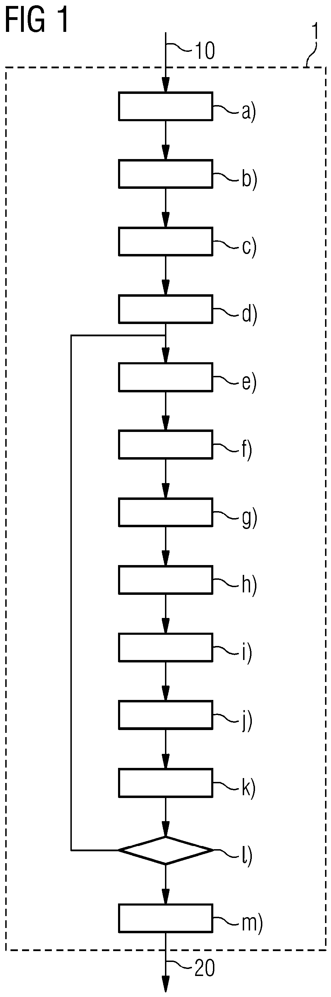

**Fig. 1** shows a flowchart as an embodiment of the method of the invention.

The computer-implemented method comprises following steps:
a) receiving a digital input image 10 with a barcode,
b) detecting a rectangular candidate area 11 within the received image, wherein the area includes the barcode and the bars of the barcode are perpendicularly arranged elongated along the longer side of the rectangular candidate area 11,
c) calculating a virtual sampling line (SL) for the candidate area 11, which is parallel to a longer side of the rectangular candidate area 11, for instance in the middle between both longer sides,
d) defining a sampling point SP on the virtual sampling line SL,
e) calculating a virtual bar line BL for the candidate area 11 perpendicular to the virtual sampling line SL crossing the sampling point SP,
f) identifying bar pixels 13 within the candidate area 11 being on the virtual bar line BL,
g) calculating an average field index for each of the bar pixels 13 representing the average pixel value of the pixels of the candidate area 11 within a predefined distance 14 around the respective pixel,
h) detecting significant pixels 15 from all the bar pixels 13, which respective pixel value is smaller than the respective average field index,
i) counting significant pixels and if the count is greater than a predefined confidence ratio, define all pixels along the virtual bar line (BL) as proper pixels,
j) reconstructing pixels by setting the proper pixels to the value of a respective pixel of a bar pixel in the image,
k) shifting the sampling point SP to the neighboring pixel of the previous sampling point on the virtual sampling line SL,
l) continuing with step e), until the sampling point SP reaches a second virtual line L2 being in the course of the other shorter edge of the rectangular candidate area 11,
m) provide the reconstructed digital image as a digital output image 20.

Moreover, an embodiment of a device 1 with a processor and a memory for reconstructing a barcode according to the invention is shown.

The device 1 is configured to receive a digital image 10 with the barcode and to reconstruct the barcode according to the method of the preceding claim at a reconstructed digital image 20, and to provide the reconstructed digital image 20.

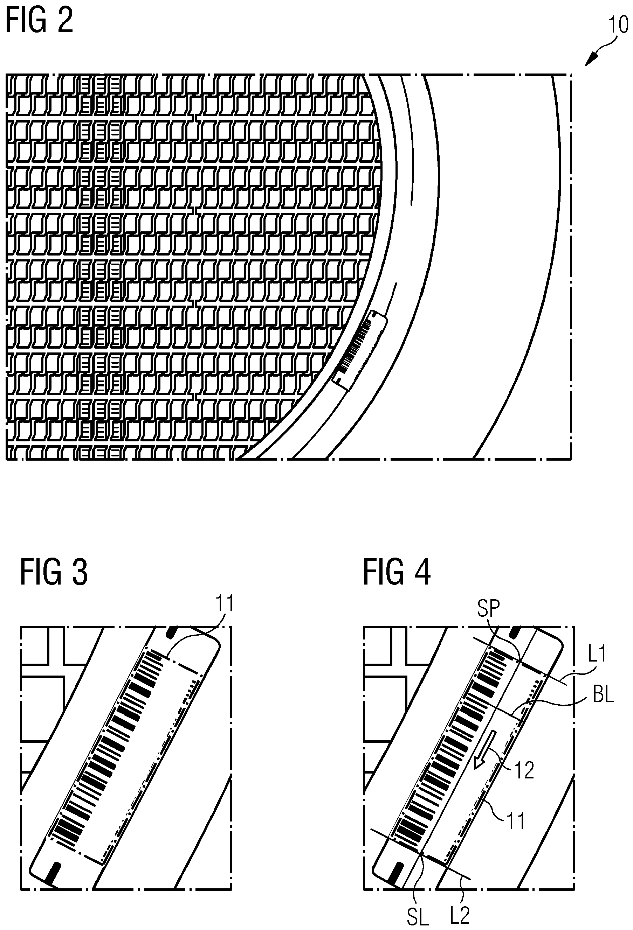

**Fig. 2** illustrates an example for a received digital image 10 including a barcode in step a).

In step b), a rectangular candidate area 11 within the received image is detected.

The area 11 includes the barcode and the bars of the barcode are perpendicularly arranged elongated along the longer side of the rectangular candidate area 11.

**Fig. 3** shows a cropped part of the image 10 of the previous figure including a rectangular candidate area 11 containing the barcode.

Cropping the relevant part of an image can improve the performance of the computer-implemented method and thus, a simpler device can be used to execute said method.

**Fig. 4** depicts a principle illustration of steps of the method according to the invention.

A virtual sampling line SL, performed at step c), for the rectangular candidate area 11 is defined, which is parallel to a longer side of the rectangular candidate area 11.

A sampling point SP on the virtual sampling line SL is defined and virtually moved to the neighboring pixel of the previous virtual point when performing the method with its steps, i.e. by a respective predefined distance.

When running through the method steps, for all possible positions of the sampling point SP the reconstruction should be applied.

The simplest way doing so is shifting the sampling point SP to the neighboring pixel of the previous sampling point, i.e. increments, on the virtual sampling line SL from a starting point from a first virtual line L1, being in the course of a shorter edge of the rectangular candidate area 11, to a second virtual line L2 being in the course of the other shorter edge of the rectangular candidate area 11.

The trace of the moved sampling point SP, i.e. the scan direction 18 along virtual scan line, goes from the first end L1 of a longer side of the rectangular candidate area 11 to the second end L2 of a longer side of the rectangular candidate area 11.

A virtual bar line BL, performed at step e), is defined for the candidate area 11 perpendicular to the virtual sampling line SL and crossing the respective sampling point at the respective scan.

The virtual bar line BL is calculated for the candidate area 11 perpendicular to the virtual sampling line SL crossing the sampling point SP.

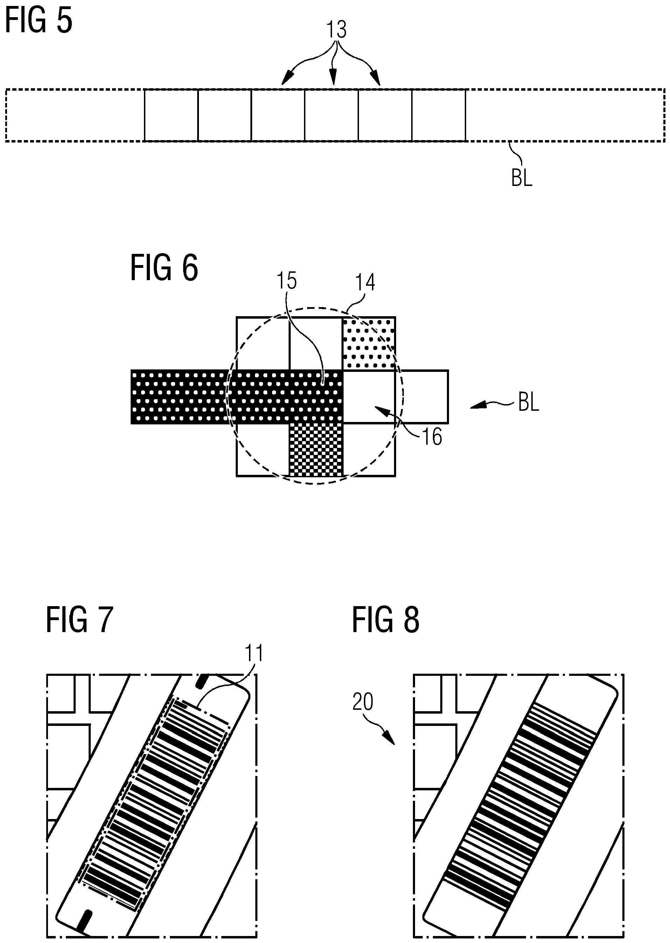

**Fig. 5** shows an illustration of a virtual bar line BL with bar pixels 13 for the candidate area 11, which are identified on the virtual sampling line SL within the candidate area 11, performed at step f).

**Fig. 6** an illustration of the determination of significant pixels in step g) to i).

An average field index for each of the bar pixels 13 is calculated representing the average pixel value of the pixels of the candidate area 11 within a predefined distance 14 around the respective pixel.

Subsequently, significant pixels 15 are detected from all the bar pixels 13, which respective pixel value is smaller than the respective average field index, e.g. 3 or 5.

Significant pixels are counted and if the sum is greater than a predefined confidence ratio, all pixels along the virtual bar line BL are defined as proper pixels,

Pixels are reconstructed by setting the proper pixels to the value of a respective pixel of a bar pixel in the image, i.e. the value of the pixels are selected to get highest contrast in the reconstructed digital image 20.

In one embodiment, the pixels represent a grey scale of a digital grey scale image.

The value representing a bar pixel in the shown figures is a black value, i.e. close to a value of zero.

The background value is a white value, i.e. close to a value of 255 at an eight-digit scale.

The scale and the values for the bar pixels and the background pixels can vary, dependent of the reader principle and the illumination, and of course being inverted.

**Fig. 7** shows the candidate area 11 with reconstructed pixels,

**Fig. 8** partially the outputted reconstructed image 20 including the candidate area 11 with reconstructed pixels.

Additional contrast enhancements to the image of the previous figure are applied.

The output image 20 can be of the size of the candidate area 11 or also of the size of the input image 10.

The candidate area 11 can replace the respective part of the input image 10 to form the output image 20.

### List of reference numerals:

- 1: device
- 10: digital input image
- 11: rectangular candidate area
- 12: scan direction along virtual sampling line, trace
- 13: bar pixel
- 14: predefined distance around pixel
- 15: significant pixel
- 16: neighbor pixel
- 20: reconstructed digital output image
- BL: virtual bar line
- L1, L2: virtual line
- SL: virtual sampling line
- SP: virtual sampling point

## Claims

1. Computer-implemented method for reconstructing a barcode, wherein for a received digital input image (10) with a barcode, a bar of the barcode with a gap, the gap represented and defined by an interrupted or broken portion of the bar, is identified, and the gap is reconstructed pixelwise by setting all gap pixels of the bar with the gap to a value representing the identified bar as a numeric value of an index in a grey scale, and a reconstructed digital output image (20) provided, wherein following steps are executed:
a) receiving a digital input image (10) with a barcode,
b) detecting a rectangular candidate area (11) within the received image, wherein the area includes the barcode and the bars of the barcode are perpendicularly arranged elongated along the longer side of the rectangular candidate area (11),
c) calculating a virtual sampling line (SL) for the candidate area (11), which is parallel to a longer side of the rectangular candidate area (11),
d) defining a sampling point (SP) on the virtual sampling line (SL),
e) calculating a virtual bar line (BL) for the candidate area (11) perpendicular to the virtual sampling line (SL) crossing the sampling point (SP),
f) identifying bar pixels (13) within the candidate area (11) being on the virtual bar line (BL),
g) calculating an average field index for each of the bar pixels (13) representing the average pixel value, representing a numeric value of an index in a grey scale, of the pixels of the candidate area (11) within a predefined distance (14) around the respective pixel,
h) detecting significant pixels (15) from all the bar pixels (13), which respective pixel value is smaller than the respective average field index,
i) counting significant pixels and if the count is greater than a predefined confidence ratio, define all pixels along the virtual bar line (BL) as proper pixels,
j) reconstructing pixels by setting the proper pixels to the value of a respective pixel of a bar pixel in the image,
k) selecting a new position of the sampling point (SP) on the virtual sampling line (SL), which is not yet processed,
l) continuing with step e), until all positions of the sampling point (SP) are being processed,
m) provide the reconstructed digital image as a digital output image (20).

2. Method according to the preceding claim, wherein
• in step d) setting the sampling point (SP) to the crossing point of the virtual sampling line (SL) and a first virtual line (L1) being in the course of a shorter edge of the rectangular candidate area (11), and
• in step k) shifting the sampling point (SP) to the neighboring pixel of the previous sampling point and is on the virtual sampling line (SL), and
• in step l) continuing with step e), until the sampling point (SP) reaches a second virtual line (L2) being in the course of the other shorter edge of the rectangular candidate area (11).

3. Method according to one of the preceding claims, wherein after the step of detecting a candidate area, a step with cropping the image (10) to the candidate area (11) is performed.

4. Device for reconstructing a barcode, comprising a processor and a memory, wherein the device is configured to receive a digital image (10) with the barcode and to reconstruct the barcode according to the method to one of the preceding claims at a reconstructed digital image (20), and to provide the reconstructed digital image (20).

## Patentansprüche

1. Computergestütztes Verfahren zum Rekonstruieren eines Strichcodes, wobei für ein empfangenes digitales Eingangsbild (10) mit einem Strichcode ein Strich des Strichcodes mit einer Lücke identifiziert wird, wobei die Lücke durch einen unterbrochenen Abschnitt des Strichs repräsentiert und definiert ist, und die Lücke pixelweise rekonstruiert wird, indem alle Lückenpixel des Strichs mit der Lücke auf einen Wert eingestellt werden, der den identifizierten Strich als numerischen Wert eines Index in einer Grauskala repräsentiert, und ein rekonstruiertes digitales Ausgangsbild (20) bereitgestellt wird, wobei folgende Schritte ausgeführt werden:
a) Empfangen eines digitalen Eingangsbildes (10) mit einem Strichcode,
b) Erkennen eines rechteckigen möglichen Bereichs (11) in dem empfangenen Bild, wobei der Bereich den Strichcode aufweist und die Striche des Strichcodes entlang der längeren Seite des rechteckigen möglichen Bereichs (11) senkrecht angeordnet sind,
c) Berechnen einer virtuellen Abtaststrecke (SL) für den möglichen Bereich (11), die parallel zu einer längeren Seite des rechteckigen möglichen Bereichs (11) verläuft,
d) Definieren eines Abtastpunkts (SP) auf der virtuellen Abtaststrecke (SL),
e) Berechnen einer virtuellen Strichstrecke (BL) für den möglichen Bereich (11), die senkrecht zur virtuellen Abtaststrecke (SL) verläuft, welche den Abtastpunkt (SP) durchkreuzt,
f) Identifizieren von Strichpixeln (13) in dem möglichen Bereich (11), die auf der virtuellen Strichstrecke (BL) liegen,
g) Berechnen eines durchschnittlichen Feldindex, der einen numerischen Wert eines Index in einer Grauskala repräsentiert, für jedes der Strichpixel (13), die den durchschnittlichen Pixelwert der Pixel in dem möglichen Bereich (11) innerhalb eines vorgegebenen Abstands (14) um das jeweilige Pixel herum repräsentieren,
h) Erkennen signifikanter Pixel (15) unter allen Strichpixeln (13), wobei der jeweilige Pixelwert kleiner ist als der jeweilige durchschnittliche Feldindex,
i) Zählen signifikanter Pixel und, wenn die Anzahl über einem vorgegebenen Konfidenzverhältnis liegt, Definieren aller Pixel auf der virtuellen Strichstrecke (BL) als ordnungsgemäße Pixel,
j) Rekonstruieren von Pixeln durch Einstellen der ordnungsgemäßen Pixel auf den Wert eines jeweiligen Pixels eines Strichpixels in dem Bild,
k) Auswählen einer neuen Position des Abtastpunkts (SP) auf der virtuellen Abtaststrecke (SL), die noch nicht verarbeitet wurde,
l) Fortfahren mit Schritt e), bis alle Positionen des Abtastpunkts (SP) verarbeitet sind,
m) Bereitstellen des rekonstruierten digitalen Bildes als digitales Ausgangsbild (20).

2. Verfahren nach dem vorhergehenden Anspruch, wobei
• bei Schritt d) Einstellen des Abtastpunkts (SP) auf den Kreuzungspunkt der virtuellen Abtaststrecke (SL) und einer ersten virtuellen Strecke (L1), die über eine kürzere Kante des rechteckigen möglichen Bereichs (11) verläuft, und
• bei Schritt k) Verschieben des Abtastpunkts (SP) zum benachbarten Pixel des vorhergehenden Abtastpunkts und auf der virtuellen Abtaststrecke (SL) und
• bei Schritt l) Fortfahren mit Schritt e), bis der Abtastpunkt (SP) eine zweite virtuelle Strecke (L2) erreicht, die über die andere kürzere Kante des rechteckigen möglichen Bereichs (11) verläuft.

3. Verfahren nach einem der vorhergehenden Ansprüche, wobei nach dem Erkennen eines möglichen Bereichs ein Beschneiden des Bildes (10) auf den möglichen Bereich (11) erfolgt.

4. Vorrichtung zum Rekonstruieren eines Strichcodes, die einen Prozessor und einen Arbeitsspeicher umfasst, wobei die Vorrichtung so konfiguriert ist, dass sie ein digitales Bild (10) mit dem Strichcode empfängt und den Strichcode dem Verfahren nach einem der vorhergehenden Ansprüche entsprechend in einem rekonstruierten digitalen Bild (20) rekonstruiert und das rekonstruierte digitale Bild (20) bereitstellt.

## Revendications

1. Procédé mis en œuvre par ordinateur pour la reconstruction d'un code à barres, dans lequel pour une image d'entrée numérique (10) reçue ayant un code à barres, une barre du code à barres ayant un espace, l'espace étant représenté et défini par une partie interrompue ou brisée de la barre, est identifiée, et l'espace est reconstruit pixel par pixel par la définition de tous les pixels d'espace de la barre ayant l'espace sur une valeur représentant la barre identifiée comme une valeur numérique d'un indice en niveaux de gris, et une image de sortie numérique reconstruite (20) fournie, dans lequel les étapes suivantes sont exécutées :
a) la réception d'une image d'entrée numérique (10) dotée d'un code à barres,
b) la détection d'une zone candidate rectangulaire (11) au sein de l'image reçue, dans lequel la zone inclut le code à barres et les barres du code à barres sont agencées de manière perpendiculaire allongées le long du côté le plus long de la zone candidate rectangulaire (11),
c) le calcul d'une ligne d'échantillonnage virtuelle (SL) pour la zone candidate (11), qui est parallèle à un côté plus long de la zone candidate rectangulaire (11),
d) la définition d'un point d'échantillonnage (SP) sur la ligne d'échantillonnage virtuelle (SL),
e) le calcul d'une ligne de barre virtuelle (BL) pour la zone candidate (11) perpendiculaire à la ligne d'échantillonnage virtuelle (SL) traversant le point d'échantillonnage (SP),
f) l'identification de pixels de barre (13) au sein de la zone candidate (11) qui se trouve sur la ligne de barre virtuelle (BL),
g) le calcul d'un indice de champ moyen pour chacun des pixels de barre (13) représentant la valeur de pixel moyenne, représentant une valeur numérique d'un indice en niveaux de gris, des pixels de la zone candidate (11) au sein d'une distance prédéfinie (14) autour du pixel respectif,
h) la détection de pixels significatifs (15) parmi tous les pixels de barre (13), laquelle valeur de pixel respective est inférieure à l'indice de champ moyen respectif,
i) le comptage de pixels significatifs et si le comptage est supérieur à un taux de confiance prédéfini, définir tous les pixels le long de la ligne de barre virtuelle (BL) comme des pixels propres,
j) la reconstruction de pixels par la définition des pixels propres sur la valeur d'un pixel respectif d'un pixel de barre dans l'image,
k) la sélection d'une nouvelle position du point d'échantillonnage (SP) sur la ligne d'échantillonnage virtuelle (SL), qui n'est pas encore traitée,
l) la poursuite de l'étape e), jusqu'à ce que toutes les positions du point d'échantillonnage (SP) soient traitées,
m) fournir l'image numérique reconstruite comme une image de sortie numérique (20).

2. Procédé selon la revendication précédente, dans lequel
• à l'étape d) la définition du point d'échantillonnage (SP) sur le point de croisement de la ligne d'échantillonnage virtuelle (SL) et d'une première ligne virtuelle (L1) qui se trouve sur le parcours d'un bord plus court de la zone candidate rectangulaire (11), et
• à l'étape k) le basculement du point d'échantillonnage (SP) vers le pixel voisin du point d'échantillonnage précédent et se trouve sur la ligne d'échantillonnage virtuelle (SL), et
• à l'étape l) la poursuite de l'étape e), jusqu'à ce que le point d'échantillonnage (SP) atteigne une deuxième ligne virtuelle (L2) qui se trouve sur le parcours de l'autre bord plus court de la zone candidate rectangulaire (11).

3. Procédé selon l'une des revendications précédentes, dans lequel après l'étape de détection d'une zone candidate, une étape de recadrage de l'image (10) sur la zone candidate (11) est réalisée.

4. Dispositif pour la reconstruction d'un code à barres, comprenant un processeur et une mémoire, dans lequel le dispositif est configuré pour recevoir une image numérique (10) ayant le code à barres et pour reconstruire le code à barres selon le procédé de l'une des revendications précédentes au niveau d'une image numérique reconstruite (20), et pour fournir l'image numérique reconstruite (20).
